# EUROPEAN PATENT APPLICATION

(11) **EP 4 300 923 A1**
(43) Date of publication of application: **03.01.2024**
(21) Application number: 22766129.5
(22) Date of filing: 16.02.2022
(51) Int. Cl.: H04L 69/166

(54) **PACKET PROCESSING METHOD AND APPARATUS**

(30) Priority: 11.03.2021 CN 202110267705
(71) Applicant: Huawei Technologies Co., Ltd., Shenzhen, Guangdong 518129 (CN)
(72) Inventor: LIU, Yun, Shenzhen, Guangdong 518129 (CN)
(74) Representative: Huawei European IPR
(86) International application number: PCT/CN2022/076497
(87) International publication number: WO 2022/188603

(57) **Abstract**

This application provides a packet processing method and apparatus. The packet processing method includes: A first device receives a first packet. The first packet includes a first bearing area and a second bearing area, and the first bearing area bears a first DA and a first SA. The first device performs slicing processing on the second bearing area to obtain N slices. The first device encapsulates each of the N slices to obtain N Ethernet frames. The first DA and the first SA are used for encapsulating at least one of the N slices. The first device sends the N Ethernet frames. In this way, when a physical link aggregation group performs network packet transmission, encapsulation overheads can be reduced, and network packet transmission efficiency can be improved.

## Description

This application claims priority to Chinese Patent Application No. 202110267705.X, filed with the China National Intellectual Property Administration on March 11, 2021 and entitled "PACKET PROCESSING METHOD AND APPARATUS", which is incorporated herein by reference in its entirety.

### TECHNICAL FIELD

This application relates to the communication field, and more specifically, to a packet processing method and apparatus.

### BACKGROUND

With rapid development of wireless communication technologies, a fifth-generation (5th Generation, 5G) wireless communication technology has become a popular subject in a current industry. A sharp increase in a communication traffic volume imposes an increasingly high requirement on a bandwidth of a transmission network. Therefore, a plurality of physical links with a small bandwidth need to be bundled into a large information transmission channel for transmission, to improve transmission reliability.

Based on a current physical link aggregation technology, during service packet transmission, a transmit end of a physical link aggregation group needs to slice a service packet, and then distribute a packet slice to each member link for transmission. A receive end of the physical link aggregation group collects, sorts, and reassembles packet slices to restore the original packet. However, current slicing and encapsulation technologies have disadvantages, resulting in low service packet transmission efficiency.

Therefore, a packet processing mechanism is urgently required, to improve service packet transmission efficiency.

### SUMMARY

This application provides a packet processing method and apparatus, to reduce encapsulation overheads and improve network packet transmission efficiency when a physical link aggregation group performs network packet transmission.

According to a first aspect, a packet processing method is provided and includes: A first device, used as a sending device of a physical link aggregation group, receives a first packet. The first packet includes a first bearing area and a second bearing area. The first bearing area bears address information, including a first destination media access control layer protocol address DA and a first source media control layer protocol address SA, and the second bearing area bears packet content other than the address information. The first device performs slicing processing on the second bearing area of the first packet based on a preset slice length, to obtain N slices. Each of the N slices does not include the first DA and the first SA. The first device encapsulates the N slices to obtain N Ethernet frames. The N Ethernet frames are in a one-to-one correspondence with the N slices, and each Ethernet frame is generated by encapsulating a corresponding slice. A frame header of at least one first Ethernet frame of the N Ethernet frames includes the first DA and the first SA, in other words, the first device encapsulates at least one of the N slices by using the first DA and the first SA. The first device then sends the obtained N Ethernet frames to a second device. The second device is a receiving device of the physical link aggregation group.

According to packet processing technical solutions provided in this application, the packet processing technical solutions are performed by the sending device of the physical link aggregation group. The sending device only performs slicing on the second bearing area of the network packet, in other words, a part of the second bearing area bearing the address information is not involved in the slicing. In this slicing solution, a length of a packet involved in the slicing is directly reduced and a quantity of slices may be reduced, and therefore, DA and SA overheads during encapsulation are reduced, and encapsulation efficiency and transmission efficiency are improved. Further, in this solution, at least one slice is encapsulated by using a DA and an SA in an original network packet, and then is sent to the receive end device of the physical link aggregation group. The receive end device performs slice reassembling and sorting to restore the original network packet. In this solution, encapsulation by using a DA and an SA of an original packet further reduces encapsulation overheads of one DA and one SA, and therefore, the encapsulation efficiency can be significantly improved, and the network packet transmission efficiency is improved.

In a possible implementation, that the first device performs slicing processing on the second bearing area of the first packet based on a preset slice length means that the slicing processing is only performed on the second bearing area. That the first device performs slicing processing on the second bearing area of the first packet based on a preset slice length includes: The first device strips the first bearing area from the first packet to obtain the second bearing area, and the first device performs slicing processing on the second bearing area. That is, the address information, namely, the DA and the SA that are of the first packet are not involved in slicing.

For example, slicing is performed on the second bearing area based on the preset slice length, to be specific, a length of each slice obtained by performing slicing on the second bearing area is the preset slice length. When a length of the original packet is greater than the preset slice length, because the first bearing area of the first packet is not involved in slicing, and slicing is only performed on data of the second bearing area, the length of the packet involved in slicing is reduced in comparison with slicing of all packets in a conventional technology. Therefore, a quantity of slices may be directly reduced in the slicing solution in this embodiment of this application. In this way, the DA and SA that are used during encapsulation are reduced, the encapsulation efficiency is significantly improved, and the transmission efficiency is improved.

In a possible implementation, the first device obtains N slices through slicing, and each of the N slices does not include the first DA and the first SA, which means that the first bearing area of the first packet is not involved in slicing. Therefore, the obtained slice does not include content of the first bearing area, that is, does not include the first DA and the first SA.

For example, the first device only performs slicing on the second bearing area of the first packet to obtain at least one slice, and the first DA and the first SA in the first packet may be extracted before slicing, and may be directly used during subsequent slice encapsulation.

In a possible implementation, the first device encapsulates the N slices. That the first device encapsulates at least one of the N slices by using the first DA and the first SA means that when encapsulating the obtained slice, the first device has to encapsulate at least one of the slices by using the first DA and the first SA. To be specific, regardless of a quantity of obtained slices, during encapsulation, at least one slice is encapsulated by using the first DA and the first SA of the original first packet, and encapsulation of another slice is not limited. In other words, the first DA and the first SA that are of the first packet have to be encapsulated into at least one slice before being sent to the second device, so that a condition for the second device to restore the original packet is met, and the second device restores the original first packet.

With reference to the first aspect, in some implementations of the first aspect, the method further includes: The first DA and the first SA are used for encapsulating each of the N slices. In other words, the first device encapsulates all obtained slices by using the first DA and the first SA.

For example, when the length of the original packet is less than or equal to the preset slice length, only one slice is needed, and the first DA and the first SA are directly used for encapsulation. That is, adding of an additional DA and an additional SA is avoided. Therefore, in the encapsulation solution according to this embodiment of this application, overheads (12 bytes) of at least one DA and one SA are reduced. Therefore, encapsulation efficiency at an Ethernet interface can be improved, and the transmission efficiency is improved.

For another example, when the length of the original packet is greater than the preset slice length, and if a quantity of slices is two, the first DA and the first SA may be used for encapsulation. Compared with a current encapsulation technology, in the solution according to this embodiment of this application, at least 12 bytes of overheads (one DA and one SA) are reduced, and therefore, the encapsulation efficiency and the transmission efficiency can be improved.

In a possible implementation, the first device sends an encapsulated Ethernet frame to the second device, and the second device performs reassembling and sorting to restore the original first packet.

With reference to the first aspect, in some implementations of the first aspect, the method further includes: The first DA and the first SA are used for encapsulating one of the N slices, and N-1 of the N slices are encapsulated by using a second DA and a second SA. The second DA and the second SA are a DA and an SA configured by the management network.

According to this technical solution, during slice encapsulation, the first DA and the first SA of original packet are used for slice encapsulation of at least one slice, and another slice may use the first DA and the first SA, or may use the second DA and the second SA. Therefore, it can be ensured that the receive end device restores the original packet by using the first DA and the first SA of the original packet, and overheads of one DA and one SA are further reduced. Therefore, the encapsulation efficiency can be significantly improved, and the network packet transmission efficiency is improved.

For example, when the length of the original packet is greater than the preset slice length, and a quantity of slices is two, a first slice may be encapsulated by using the first DA and the first SA, and a second slice may be encapsulated by using the second DA and the second SA during encapsulation. In comparison with the current encapsulation technology, in the solution according to this embodiment of this application, at least 12 bytes of overheads (one DA and one SA) are reduced, and therefore, the encapsulation efficiency and the transmission efficiency can be improved.

For another example, when the length of the original packet is greater than the preset slice length, a quantity of slices may be directly reduced by one in the slicing solution of this application. For example, in the conventional technology, three slices are obtained through slicing, and in this application, two slices are obtained through slicing. Further, in comparison with the conventional technology in which the second DA and the second SA are used for encapsulating all slices, and 36 bytes of overheads need to be increased, in the encapsulation solution of this application, one first DA and one first SA are used for encapsulating one slice, and the second DA and the second SA or the first DA and the first SA are used for encapsulating the other slice. In this case, in the slicing and encapsulation solution in this embodiment of this application, only 12 bytes of overheads need to be increased. In comparison with the conventional technology, 24 bytes of overheads are directly reduced, and the encapsulation efficiency and the transmission efficiency are improved.

With reference to the first aspect, in some implementations of the first aspect, the method further includes: A length of each of the N slices is 128 to 1522 bytes.

According to this technical solution, slicing is performed on the second bearing area of the original packet based on a slice length in the interval, at least one slice is encapsulated by using the DA and the SA in the original packet, and then is sent to the receive end device of the physical link aggregation group, and the receive end device performs slice reassembling and sorting to restore the original network packet. In a range of the slice length limited by this solution, the encapsulation by using the DA and the SA of the original packet can effectively reduce DA and SA encapsulation overheads, and therefore, the encapsulation efficiency can be significantly improved, and the network packet transmission efficiency is improved.

With reference to the first aspect, in some implementations of the first aspect, the method further includes: The first device performs slicing processing on the second bearing area based on the preset slice length. The preset slice length is greater than or equal to a first length, and the first length is the length of the original packet.

According to this technical solution, slicing is performed on the second bearing area based on the preset slice length, to be specific, the length of each slice obtained by performing slicing on the second bearing area is the preset slice length. When the preset slice length is greater than or equal to the length of the original packet, in this case, when the first device performs slicing on the second bearing area of the original packet, only one slice can be obtained. Then, only the first DA and the first SA that are of the first packet are used during encapsulation, and therefore, the encapsulation efficiency can be greatly improved, and the packet transmission efficiency is also improved.

In a possible implementation, the first device performs slicing processing on the second bearing area of the first packet based on the preset slice length. The preset slice length, for example, 128 bytes or 192 bytes, is determined based on a specific system.

For example, the preset slice length is 128 bytes, and a length of the first packet is 192 bytes. According to a slicing method provided in this embodiment of this application, the first device performs slicing on the second bearing area, that is, subtracts 12 bytes occupied by the first bearing area (the first DA and the first SA) from the length of the first packet. That is, a length of a packet involved in slicing is 180 bytes. In this case, two slices may be obtained by slicing based on the preset slice length of 128 bytes.

In a possible implementation, the length of the first packet is 1522 bytes, and the length is a maximum transmission length generally defined for a network packet in an Ethernet.

For example, when the length of the first packet is 1522 bytes, and the preset slice length is greater than the first length, the first device can obtain only one slice by performing slice processing. When the slice is encapsulated, the first DA and the first SA that are of the first packet may be directly used. This directly reduces the encapsulation overheads, improves the encapsulation efficiency, and further improves the network packet transmission efficiency.

According to a second aspect, a packet processing method is provided and includes: A second device receives N Ethernet frames, where the N Ethernet frames are N Ethernet frames obtained by a first device by performing slicing processing on a second bearing area of a first packet based on a preset slice length to obtain N slices and encapsulating the N slices.

The second device restores the first packet based on the N Ethernet frames.

According to the packet processing technical solution provided in this application, the second device is used as a receive end of a physical link aggregation group, and receives Ethernet frames sent by the first device. The second device sorts and reassembles the received Ethernet frames, to restore the original first packet. The Ethernet frame is obtained by the first device based on the preset slice length by only performing slicing processing on the second bearing area of the first packet and through encapsulation. Therefore, on a premise that the second device can restore the original first packet, overheads of a DA and an SA in the Ethernet frame are reduced, and packet transmission efficiency is also improved.

With reference to the second aspect, in some implementations of the second aspect, the method further includes: The preset slice length is greater than or equal to a first length, and the first length is a length of the original packet.

According to this technical solution, slicing is performed on the second bearing area based on the preset slice length, to be specific, a length of each slice obtained by performing slicing on the second bearing area is the preset slice length, and the preset slice length is greater than or equal to a length of the first packet. In this case, the first device performs slicing on the second bearing area of the first packet, and only one slice can be obtained. Then, only a first DA and a first SA that are of the first packet are used during the encapsulation, and therefore, encapsulation efficiency can be greatly improved, and the packet transmission efficiency can be effectively improved.

In a possible implementation, the first device performs slicing processing on the second bearing area of the first packet based on the preset slice length. The preset slice length, for example, 128 bytes or 192 bytes, is determined based on a specific system.

In a possible implementation, the length of the first packet is 1522 bytes, and the length is a maximum transmission unit usually defined for a network packet in the Ethernet.

According to a third aspect, a packet processing apparatus is provided. The packet processing apparatus is a unit that performs the method according to the first aspect or various implementations of the first aspect.

Based on the foregoing technical solution, the packet processing apparatus performs the method according to the first aspect or the various implementations of the first aspect, so that overheads of at least one DA and one SA are reduced during encapsulation, and therefore, encapsulation efficiency is improved, and network packet transmission efficiency is further improved.

According to a fourth aspect, a packet processing apparatus is provided. The packet processing apparatus is a unit that performs the method according to the second aspect or various implementations of the second aspect.

Based on the foregoing technical solution, the packet processing apparatus performs the method according to the second aspect or the various implementations of the second aspect, so that overheads of at least one DA and one SA are reduced during encapsulation, and therefore, encapsulation efficiency is improved, and network packet transmission efficiency is further improved.

According to a fifth aspect, a packet processing apparatus is provided and includes a memory and a processor, where the memory is configured to store computer instructions, and the processor is configured to execute the computer instructions stored in the memory, to enable the packet processing apparatus to perform the packet processing method according to the first aspect or the second aspect and various possible implementations thereof.

Based on the foregoing technical solution, the packet processing apparatus performs the method in the foregoing implementation, so that overheads of at least one DA and one SA are reduced during encapsulation, and therefore, encapsulation efficiency is improved, and network packet transmission efficiency is further improved.

Optionally, there are one or more processors, and there are one or more memories.

Optionally, the memory may be integrated with the processor, or the memory and the processor are separately disposed.

According to a sixth aspect, a packet processing system is provided and includes one of the first device and the second device.

According to a seventh aspect, a computer-readable medium is provided. The computer-readable medium stores a computer program (which may also be referred to as code or instructions). When the computer program is run on a computer, the computer is enabled to perform the method according to any one of the possible implementations of the first aspect and the second aspect.

### BRIEF DESCRIPTION OF DRAWINGS

FIG. 1 is a schematic diagram of a communication system of a packet processing method applicable to an embodiment of this application;
FIG. 2 is a schematic block diagram of a packet processing method applicable to an embodiment of this application;
FIG. 3 is a schematic diagram of a slicing method applicable to an embodiment of this application;
FIG. 4 is a schematic diagram of a slice encapsulation method applicable to an embodiment of this application;
FIG. 5 is a schematic interaction diagram of a packet processing method applicable to an embodiment of this application;
FIG. 6 is a schematic block diagram of a packet processing apparatus applicable to an embodiment of this application; and
FIG. 7 is a schematic diagram of an architecture of a packet processing apparatus applicable to an embodiment of this application.

### DESCRIPTION OF EMBODIMENTS

The following describes technical solutions of this application with reference to accompanying drawings.

A wireless communication system mentioned in embodiments of this application includes but is not limited to: a long term evolution (LTE) system, an LTE frequency division duplex (FDD) system, an LTE time division duplex (TDD) system, a universal mobile telecommunication system (UMTS), a worldwide interoperability for microwave access (WiMAX) communication system, a 5G system, a new radio (NR) system, a future communication system, or the like.

The following clearly and completely describes the technical solutions in embodiments of this application with reference to the accompanying drawings in embodiments of this application. It is clear that the described embodiments are some but not all of embodiments of this application. All other embodiments obtained by a person of ordinary skill in the art based on embodiments of this application without creative efforts shall fall within the protection scope of this application.

Embodiments of this application provide a packet processing method, to improve data transmission efficiency when a service packet is transmitted on a physical link aggregation group.

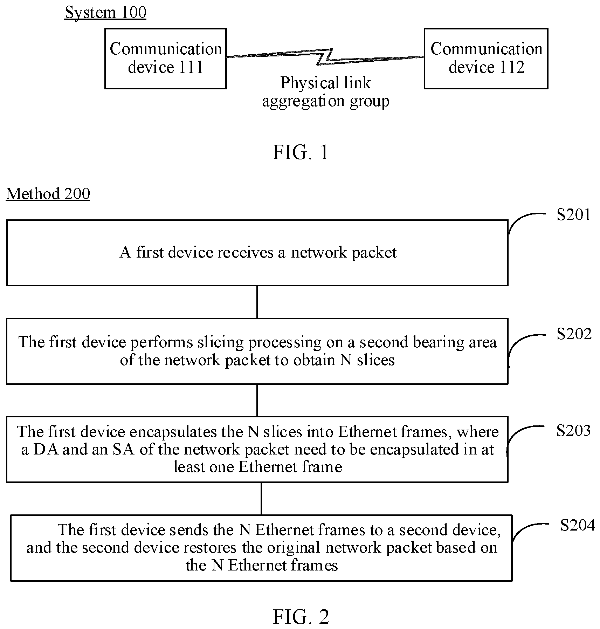

To facilitate understanding of embodiments of this application, a network communication system to which embodiments of this application are applicable is first described in detail with reference to FIG. 1.

FIG. 1 is a schematic diagram of a communication system of a packet processing method applicable to an embodiment of this application. As shown in FIG. 1, the communication system includes at least two communication devices, for example, a communication device 111 and a communication device 112 shown in FIG. 1. Data transmission may be performed between the communication device 111 and the communication device 112 at a link layer by using a physical link aggregation group.

In this embodiment of this application, link aggregation is referred to as the physical link aggregation group. All links included in the physical link aggregation group are normal frequency links; or the physical link aggregation group includes a normal frequency band link and an enhanced frequency band link; or all links included in the physical link aggregation group are enhanced frequency band links.

An aggregated physical link between the communication device 111 and the communication device 112 includes an Ethernet link, a microwave link, an optical transport network (OTN) link, and the like. When the communication device 111 communicates with the communication device 112, the communication device 111 transmits a received network packet to the communication device 112 through the aggregated link. A plurality of member links share total traffic of the aggregated link together. Specifically, the communication device 111 determines, according to a port load sharing policy configured by a user, a port of a member link through which a network packet is sent to the communication device 112, to implement data transmission.

A size of data transmitted over a single link is limited. To improve communication performance, links between communication devices may be aggregated (or bundled) to provide a large transmission channel. It can be understood that aggregation of physical links is synchronous at a transmit end and a receive end. In a physical link aggregation group scenario, the transmit end slices a service packet, transmits a sliced packet through a link that is involved in the aggregation, and the receive end reassembles received sliced packets to obtain the service packet.

In this embodiment of this application, the physical link aggregation group includes a microwave link aggregation group, an OTN link aggregation group, a time-division multiplexing (TDM) link aggregation group, and a hybrid link aggregation group. A physical link aggregation technology includes physical link aggregation (PLA), enhanced physical link aggregation (EPLA), a cross-band link aggregation technology (SDB), and the like. This application may be widely used in an aggregated link in which a plurality of physical links between network devices are bundled into one logical link. This is not limited in this embodiment of this application.

It should be understood that the communication device 111 and the communication device 112 in the communication system may be any network transmission device, for example, a switch, with a slice reassembling function and a wireless transceiver function. Data frames may be forwarded between different link layers. A switch generally has a plurality of ports, and a main function of the switch is to forward a data packet received by one port to another appropriate port. A basic principle of implementing data packet exchanging is that a data table referred to as an address table and a learning module are stored in the switch. The address table includes at least one address entry and one port entry, indicating that a data packet with a specific destination address should be sent from a corresponding port. After receiving one data packet from one port, the switch extracts information about the destination address and searches an internal address table. If a corresponding entry is found, the switch forwards the data packet based on the corresponding port. Otherwise, the switch processes the packet as a broadcast packet. In this case, the learning module learns and updates the address entry based on a source address and a source port that are of the received packet.

FIG. 2 is a schematic block diagram of a packet processing method applicable to an embodiment of this application. The method 200 may include the following steps.

S201: A first device receives a network packet.

For example, the first device, as an example of a transmit-end communication device, receives the network packet from another external network or a terminal device.

It should be understood that, in this embodiment of this application, the external network may provide a service for a user, and may be any device with a wireless transceiver function. The device includes but is not limited to: a gNB, a transmission reception point (TRP), an evolved NodeB (eNB), a radio network controller (RNC), a NodeB (NB), a base station controller (BSC), a base transceiver station (BTS), a home base station (for example, a home evolved NodeB, or a home NodeB, HNB), a base band unit (BBU), or a wireless fidelity (Wi-Fi) access point (access point, AP), a repeater, a router, a bridge, a gateway, a switch, and the like. This is not limited in this embodiment of this application.

It should be understood that in this embodiment of this application, the terminal device may include various access terminals, mobile devices, user terminals, or user apparatuses that have a wireless communication function. For example, the terminal device may include user equipment (UE), a handheld terminal, a notebook computer, a subscriber unit, a cellular phone, a smartphone, a wireless data card, a personal digital assistant (PDA) computer, a tablet computer, a wireless modem, a handheld device (handheld), a laptop computer, a cordless telephone or a wireless local loop (WLL) station, and a machine type communication (MTC) terminal or other devices that can access a network.

By way of example, and not limitation, in this embodiment of this application, the terminal device may alternatively be a wearable device. The wearable device may also be referred to as a wearable intelligent device, and is a general term of wearable devices such as glasses, gloves, watches, clothes, and shoes that are developed by applying wearable technologies in intelligent designs of daily wear. The wearable device is a portable device that can be directly worn on the body or integrated into clothes or an accessory of a user. The wearable device is not only a hardware device, but also implements a powerful function through software support, data exchange, and cloud interaction. Generalized wearable intelligent devices include full-featured and large-size devices that can implement complete or partial functions without depending on smartphones, such as smart watches or smart glasses, and devices that focus on only one type of application function and need to work with other devices such as smartphones, such as various smart bands or smart jewelry for monitoring physical signs.

In addition, in this embodiment of this application, the terminal device may alternatively be a terminal device in an internet of things (IoT) system. The IoT is an important part of future development of information technologies. A main technical feature of the IoT is connecting things to a network by using a communication technology, to implement an intelligent network for human-machine interconnection and thing-thing interconnection. The terminal device and an access network device communicate with each other by using an air interface technology. An application scenario is not limited in this embodiment of this application.

It should be understood that, in this embodiment of this application, the network packet is divided into two parts: a first bearing area and a second bearing area. The first bearing area bears a destination medium access control layer protocol address (Destination Address, DA) and a source medium access control layer protocol address (Source Address, SA), and the second bearing area bears packet content other than the DA and the SA. That is, the network packet includes the DA, the SA, and other packet content.

S202: The first device performs slicing processing on the second bearing area of the network packet to obtain N slices.

Specifically, the first device only performs, based on a preset slice length, slicing on data carried in the second bearing area of the network packet.

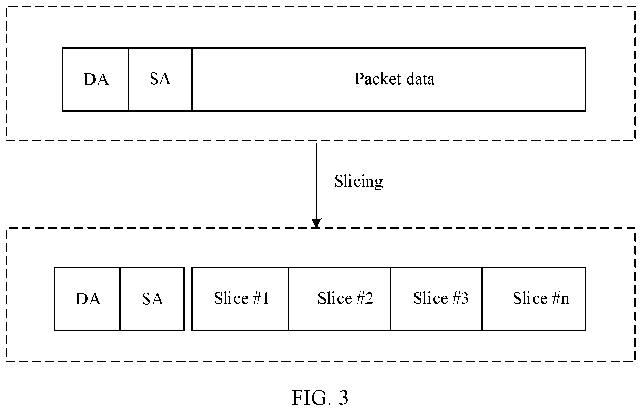

FIG. 3 is a schematic diagram of a slicing method according to an embodiment of this application.

As shown in FIG. 3, a DA and an SA that are carried in a first bearing area in a network packet are not involved in slicing, and packet data carried in a second bearing area is directly sliced based on a preset slice length. After slicing is performed on the second bearing area, a slice #1, a slice #2, a slice #3, ..., and a slice #N are obtained, where N is a positive integer greater than or equal to 1. The slice length, for example, 128 bytes or 192 bytes, is determined based on a specific system. A specific slicing principle is similar to a slicing principle in a conventional technology. This is not limited in embodiments of this application.

S203: A first device encapsulates the N slices into Ethernet frames to obtain N Ethernet frames, where address information of the DA and the SA of the network packet need to be encapsulated in at least one Ethernet frame.

It should be understood that a/an TCP/IP network protocol stack is divided into four layers: an application layer, a transport layer, a network layer, and a link layer. In a communication process, a data header needs to be added to each protocol layer, which is referred to as encapsulation. Data at the network layer is referred to as an IP datagram, and data at the link layer is referred to as a frame. After data is encapsulated into a frame, the frame is transmitted to a target communication device through a member link. The target communication device strips off a corresponding header and finally sends data at an original layer to an application program for processing.

It should be understood that the Ethernet frame includes four parts: an Ethernet frame start part (a preamble and a start frame delimiter), an Ethernet header (including a destination MAC address DA and a source MAC address SA), a data load area, and a redundancy check code. The Ethernet frame start part includes eight bytes (where the preamble occupies seven bytes, and the start frame delimiter occupies one byte). The Ethernet header occupies at least 12 bytes (where the destination MAC address DA occupies six bytes, and the source MAC address DA occupies six bytes). The data payload area occupies 46 to 1522 bytes. The check code occupies four bytes.

When a packet slice is transmitted over an Ethernet link, Ethernet encapsulation needs to be performed. The first device encapsulates a slice payload by using an Ethernet header, an Ethernet frame start part, a redundancy check code, and another part (frame type). According to this embodiment of this application, bytes that are occupied by a DA and an SA during transmission and that are included in the Ethernet header are mainly optimized. Overheads caused by encapsulation of the Ethernet frame start part, the redundancy check code, and the another part (frame type) may be defined as other overheads, and the other overheads may be ignored in this embodiment of this application.

Specifically, the first device encapsulates the slice payload by using the DA and the SA.

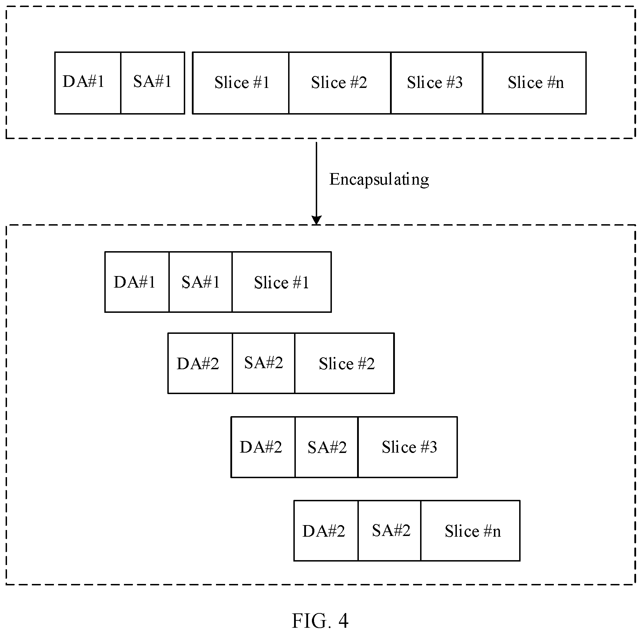

FIG. 4 is a schematic diagram of a slice encapsulation method according to an embodiment of this application.

As shown in FIG. 4, a slice is encapsulated by using a DA and an SA. The DA and the SA may be a DA#1 and an SA#1 that are carried in a first bearing area in an original network packet, or a DA#2 and an SA#2 may be configured to encapsulate the slice. For example, the DA#2 and the SA#2 may be configured by a management network, or may be preconfigured by a communication device. However, it should be noted that at least one slice needs to be encapsulated by using the DA and the SA of the original network packet. In other words, the DA#1 and the SA#1 of the original network packet need to be sent to a second device, to restore the original network packet.

It should be noted that the DA#1 and the SA#1 in the original packet are an actual destination MAC address and an actual source MAC address respectively. During Ethernet link transmission, the DA#1 and SA#1 are transmitted from a transmit end device (a first device) of a physical link aggregation group to a receive end device (the second device), so that the receive end device can restore the original network packet by using the DA#1 and the SA#1. The configured DA#2 and SA#2 may be preset values. For example, the configured DA#2 is usually a broadcast address, and the configured SA#2 is usually a unicast address, which can only be used for link transmission. After receiving a slice encapsulated by using the configured DA#2 and SA#2, the receive end device strips off the configured DA#2 and SA#2 and other overheads used for encapsulation, to restore the original packet.

S204: The first device sends N Ethernet frames to the second device, and the second device restores the original network packet based on the N Ethernet frames.

Specifically, the first device distributes the N Ethernet frames to member links for transmission, and the second device receives the Ethernet frames, and sorts and reassembles the Ethernet frames to restore the original network packet.

The first device determines, according to a port load sharing policy configured by a user, a member link through which the Ethernet frame is sent to the second device. After receiving the Ethernet frames transmitted by the member links, the second device sorts the Ethernet frames, strips off the added DA#2 and SA#2 and the other overheads used for the encapsulation, remains only one DA#1 and one SA#1 in the original network packet, and then performs reassembling to restore the original network packet.

According to the solution provided in this embodiment of this application, the first device only performs slicing on a data bearing area other than an address bearing area in the network packet. When address information is not involved in slicing, a quantity of slices may be reduced, and DA and SA overheads during encapsulation are directly reduced. In the encapsulation solution provided in this application, the DA and the SA of the original network packet are used for encapsulation of at least one slice. On a premise that the second device can restore the original network packet, overheads of at least one DA and one SA are further reduced. Therefore, encapsulation efficiency can be significantly improved, and network packet transmission efficiency is improved.

In the following embodiments, for differentiation and without loss of generality, a communication device #1 is used as an example of a first device at a transmit end of a physical link aggregation group, a communication device #2 is used as an example of a second device at a receive end of the physical link aggregation group, and an Ethernet packet #1 is used as an example of a network packet.

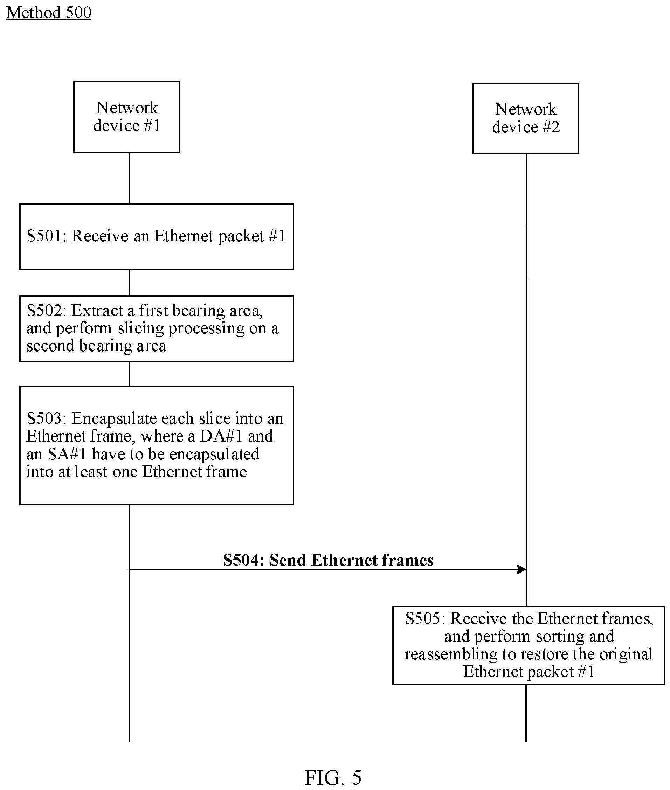

FIG. 5 is a schematic interaction diagram of a network slice processing method applicable to an embodiment of this application. The method 500 includes the following steps.

S501: A communication device #1 receives an Ethernet packet #1 (as an example of a first packet).

Specifically, the Ethernet packet #1 includes a first bearing area and a second bearing area, where the first bearing area includes a destination MAC address DA#1 and a source MAC address SA#1 (an example of a first DA and a first SA). The second bearing area bears packet content other than the DA#1 and the SA#1. That is, the Ethernet packet #1 includes the first bearing area and the second bearing area. The first bearing area of the Ethernet packet #1 includes the destination MAC address DA#1 and the source MAC address SA#1.

S502: The communication device #1 extracts the first bearing area, and performs slicing processing on the second bearing area based on a preset slice length to obtain at least one slice.

In a possible implementation, the communication device #1 may extract the first bearing area based on a preconfiguration of a management network for stripping. For example, the management network configures that the communication device #1 extracts 12 bytes starting from a specific byte, that is, extract the destination MAC address DA#1 and the source MAC address SA#1. For another example, the first bearing area includes identification information, and the identification information identifies locations of the DA#1 and the SA#1, so that the communication device #1 identifies the specific locations of the DA#1 and the SA#1, to accurately extract the DA#1 and the SA#1.

For example, the communication device #1 performs slicing on the second bearing area of the Ethernet packet #1, that is, performs slicing on the packet content other than the DA#1 and the SA#1. For example, the communication device #1 may slice, based on the preconfiguration of the management network, the remaining packet content after the DA#1 and the SA#1 are extracted. For another example, the management network configures that the communication device #1 performs slicing directly from the specific bytes. For another example, the management network identifies the remaining packet content other than the DA#1 and the SA#1 in the Ethernet packet #1. Identification information identifies the remaining packet content, so that the communication device #1 can directly identify the specific locations of the DA#1 and the SA#1, and directly perform slicing processing on the remaining packet content. Specifically, the communication device #1 performs slicing on the second bearing area based on the preset slice length. The slice length, for example, 128 or 192, is determined based on a specific system. A specific slicing principle is similar to a slicing principle in a conventional technology. This is not limited in embodiments of this application.

In a possible implementation, impact of a relationship between the preset slice length and a length of an original packet on a slicing result may be classified into following two cases:

In a first case, if an original length of the Ethernet packet is less than or equal to the preset slice length, one slice may be obtained in the slicing solution in this application, and one slice may also be obtained in the slicing solution in the conventional technology.

For example, the original length of the Ethernet packet is 64 bytes, and the slice length is 512 bytes. After the communication device #1 extracts 12 bytes of the first bearing area, and the second bearing area left is 52 bytes, and the second bearing area whose length is 52 bytes is sliced based on the preset slice length of 512 bytes, to obtain one slice. According to a slicing method in the conventional technology, to be specific, an original Ethernet packet #1 whose length is 64 bytes is sliced based on the preset length of 512 bytes, to obtain one slice. For another example, if the original length of the Ethernet packet is 128 bytes, according to the slicing method in this embodiment of this application, to be specific, a second bearing area whose length is 116 bytes is sliced based on the preset length of 512 bytes, to obtain one slice. According to the slicing method in the conventional technology, one slice may be obtained.

In a second case, if an original length of the Ethernet packet is greater than the preset slice length, the slicing solution in this application may reduce one slice compared with the slicing solution in the conventional technology.

For example, if the original length of the Ethernet packet is 513 bytes and the slice length is 512 bytes, a second bearing area whose length is 501 bytes is sliced based on the preset slice length of 512 bytes, to obtain one slice. According to the slicing method in the conventional technology, an original packet whose length is 513 bytes is directly sliced, to obtain two slices. For another example, if the original length of the Ethernet packet is 1025 bytes, a second bearing area whose length is 1012 bytes is sliced based on the preset slice length of 512 bytes, to obtain two slices. According to the slicing method in the conventional technology, three slices may be obtained.

Therefore, according to the slicing solution provided in this embodiment of this application, if the original length of the Ethernet packet is greater than the preset slice length, one slice may be directly reduced, to further reduce encapsulation overheads, and therefore, improve transmission efficiency.

S503: The communication device #1 encapsulates each slice into one Ethernet frame by using one DA and one SA, where the DA#1 and the SA#1 that are carried in the first bearing area are encapsulated into at least one Ethernet frame.

Specifically, the communication device #1 encapsulates each slice by using address information of the DA and the SA. The DA and the SA may be the DA#1 and the SA#1 (an example of the first DA and the first SA) in the original Ethernet packet #1, or may be one DA#2 and one SA#2 (an example of a second DA and a second SA) configured in the management network. At least one slice has to be encapsulated by using the DA#1 and the SA#1 in the original Ethernet packet #1, in other words, the DA#1 and the SA#1 have to be sent to a communication device #2, to restore the original Ethernet packet #1.

In a possible implementation, the impact of the relationship between the preset slice length and the length of the original packet on an encapsulation result may be classified into following two cases:
In a first case, if the original length of the Ethernet packet is less than or equal to the preset slice length, one slice is obtained through slicing. In an encapsulation solution according to this embodiment of this application, the extracted DA#1 and SA#1 are used for encapsulation, and no additional configuration is needed. In an encapsulation solution in the conventional technology, a slice is directly encapsulated by using the DA#2 and the SA#2. In this case, encapsulation overheads of one DA and one SA are reduced in the encapsulation solution in this embodiment of this application, and therefore, encapsulation efficiency and the transmission efficiency are improved.

For example, if the original length of the Ethernet packet is 64 bytes, and the slice length is 128 bytes, a second bearing area whose length is 64 bytes is sliced based on the preset slice length of 128 bytes, to obtain one slice. According to the slicing method in the conventional technology, an original packet whose length is 64 bytes is directly sliced, and one slice may also be obtained. Therefore, during encapsulation, in the encapsulation solution in this application, the one slice is encapsulated by using one extracted DA#1 and one extracted SA#1 of the original Ethernet packet #1. In the encapsulation method in the conventional technology, one slice is encapsulated by using one DA#2 and one SA#2. In comparison, in the encapsulation solution according to this embodiment of this application, the encapsulation overheads (12 bytes) of one DA and one SA are reduced, and therefore, the encapsulation efficiency and the transmission efficiency are improved.

In a second case, if the original length of the Ethernet packet is greater than the preset slice length, n (n is a positive integer greater than or equal to 1) slices are obtained through slicing. At least one slice needs to be encapsulated by using the DA#1 and the SA#1, and another slice may be encapsulated by using the DA#1 and the SA#1, or may be encapsulated by using the DA#2 and the SA#2. This is not limited in this embodiment of this application.

For example, if the original length of the Ethernet packet is 128 bytes and the slice length is 64 bytes, a second bearing area whose length is 128 bytes is sliced based on the preset slice length of 64 bytes, to obtain two slices. According to the slicing method in the conventional technology, an original packet whose length is 128 bytes is directly sliced, and two slices may also be obtained. Therefore, during encapsulation, in the encapsulation solution in this application, one slice is encapsulated by using one DA#1 and one SA#1, and another slice may be encapsulated by using the DA#1 and the SA#1, or may be encapsulated by using the DA#2 and the SA#2. In an encapsulation method in the conventional technology, two slices are encapsulated by using two DA#2s and two SA#2s. In comparison with the encapsulation solution in this embodiment of this application, the encapsulation overheads (12 bytes) of one DA and one SA are reduced, and therefore, the encapsulation efficiency and the transmission efficiency are improved.

For another example, when the original length of the Ethernet packet is 513 bytes and the slice length is 512 bytes, a second bearing area whose length is 513 bytes is sliced based on the preset slice length of 512 bytes, to obtain one slice. According to the slicing method in the conventional technology, an original packet whose length is 513 bytes is directly sliced, to obtain two slices. Therefore, during encapsulation, in the encapsulation solution in this application, one DA#1 and one SA#1 are used for encapsulating the one slice, and in the encapsulation method in the conventional technology, two DA#2s and two SA#2s are used for encapsulating the two slices. In comparison, in the encapsulation solution in this embodiment of this application, encapsulation overheads (24 bytes) of the two DAs and the two SA are reduced, and therefore, the encapsulation efficiency and the transmission efficiency are improved.

For another example, when the original length of the Ethernet packet is 129 bytes and the slice length is 64 bytes, a second bearing area whose length is 129 bytes is sliced based on the preset slice length of 64 bytes, to obtain two slices. According to the slicing method in the conventional technology, an original packet whose length is 129 bytes is directly sliced, to obtain three slices. Therefore, during encapsulation, in the encapsulation solution in this application, one slice is encapsulated by using one DA#1 and one SA#1, and another slice may be encapsulated by using the DA#1 and the SA#1, or may be encapsulated by using the DA#2 and the SA#2. According to the encapsulation method in the conventional technology, three DA#2s and three SA#2 are used for encapsulating three slices. In comparison, according to the encapsulation solution in this embodiment of this application, encapsulation overheads (24 bytes) of two DAs and two SAs are reduced, and therefore, the encapsulation efficiency and the transmission efficiency are improved.

In a possible implementation, the communication device #1 performs slicing on the second bearing area, and the preset slice length is greater than or equal to 1522 bytes. It should be understood that a maximum data length in Ethernet is 1522 bytes by default, in other words, a maximum transmission unit (MTU) in the Ethernet is 1522 bytes. For a slicing principle, refer to the conventional technology. In this case, the slicing solution in this embodiment of this application is applied, and only one slice can be obtained regardless of a length of the second bearing area. Therefore, a minimum quantity of slices may be directly obtained, the extracted DA#1 and SA#1 are used for encapsulation, so that DA and SA overheads are reduced, and the encapsulation efficiency and the transmission efficiency can be improved to a greatest extent.

For optimization effects of slicing and encapsulation technologies in this embodiment of this application, refer to the following table (unit: byte).

Table 1 is a comparison table of DA+SA overhead optimization in the solution of this application based on different lengths of the original packet.

**Table 1**

| Length of the original packet | Slice length | DA+SA overheads in the conventional technology | This application DA+SA overheads | Optimized overheads | Optimized overhead ratio (original packet) |
|---|---|---|---|---|---|
| 64 | 512 | 12 | 0 | 12 | 18.75 |
| 128 | 512 | 12 | 0 | 12 | 9.375 |
| 256 | 512 | 12 | 0 | 12 | 4.6875 |
| 512 | 512 | 12 | 0 | 12 | 2.34375 |
| 513 | 512 | 24 | 0 | 24 | 4.67836 |
| 1024 | 512 | 24 | 12 | 12 | 1.1718 |

As shown in the foregoing table, the DA+SA overheads in a third column in an existing technical solution is a quantity of bytes of a DA and an SA that need to be added for encapsulation in the solution of the conventional technology, the DA+SA overheads of this application in a fourth column is a quantity of bytes of a DA and an SA that need to be added for encapsulation in the solution in this embodiment of this application, the optimized overheads in a fifth column is a quantity of bytes of DA+SA overheads that are saved in the solution in this embodiment of this application compared with the DA+SA overheads needed in the existing technical solution, and the optimized overhead ratio in a sixth column is a ratio of the saved overhead bytes to the length of the original packet.

It may be learned from data in the foregoing table that, in the solution of this embodiment of this application, for a packet of any length, an overhead ratio can be reduced by reducing byte overheads of DA+SA. It should be noted that an overhead optimization effect of a short packet is more obvious compared with that of a long packet. As a length of a packet increases, an optimization effect may be approximated as gradually reducing.

In a possible implementation, for packets of a same length, a longer slice length can directly affect a quantity of slices, and further affect a ratio of encapsulated DA and encapsulated SA. Particularly, for the long packet, the optimization effect is obvious. Therefore, increasing the slice length can directly reduce the DA and SA overheads by reducing the quantity of slices, and improve the transmission efficiency.

S504: The communication device #1 distributes Ethernet frames to member links, and transmits the Ethernet frames to the communication device #2 through the member links. S505: The communication device #2 receives the Ethernet frames, and performs sorting and reassembling to restore the original Ethernet packet #1.

Specifically, after receiving each slice, the communication device #2 strips off added DA#2 and SA#2, redundant DA#1 and SA#1, and other overheads, and leaves only the DA#1 and SA#1 in the original packet. After sorting and reassembling, the original Ethernet packet #1 is restored. A sorting and reassembling solution is similar to that in the conventional technology. This is not limited in this embodiment of this application.

Based on the solution provided in this embodiment of this application, the communication device #1 only performs slicing on the second bearing area of the Ethernet packet #1. In a case that the DA#1 and the SA#1 are not involved in slicing, the quantity of slices may be reduced, and the DA and SA overheads during encapsulation are directly reduced. In the encapsulation solution provided in this application, the DA and the SA of the original network packet are used for encapsulation of at least one slice. On a premise that the communication device #1 can restore the original Ethernet packet #1, overheads of at least one DA and one SA are further reduced. Therefore, the encapsulation efficiency can be significantly improved, and the network packet transmission efficiency can be improved.

Embodiments described in this specification may be independent solutions, or may be combined based on internal logic. These solutions all fall within the protection scope of this application.

It should be understood that each step in the foregoing embodiments is merely a possible implementation, and this is not limited in embodiments of this application.

It may be understood that, in the foregoing method embodiments, the methods and operations implemented by a terminal device may alternatively be implemented by a component (for example, a chip or a circuit) that is used in the terminal device, and the methods and the operations implemented by a communication device may alternatively be implemented by a component (for example, a chip or a circuit) that is used in the communication device.

The foregoing mainly describes the solutions provided in embodiments of this application from a perspective of interaction between the devices. It may be understood that, to implement the foregoing functions, each network element such as a transmit end device or a receive end device includes a corresponding hardware structure and/or software module for performing each function. A person skilled in the art may be aware that, in combination with the examples described in embodiments disclosed in this specification, units and algorithm steps can be implemented by hardware or a combination of hardware and computer software in this application. Whether a function is performed by hardware or hardware driven by computer software depends on particular applications and design constraints of the technical solutions. A person skilled in the art may use different methods to implement the described functions for each particular application, but it should not be considered that the implementation goes beyond the scope of this application.

In embodiments of this application, the transmit end device or the receive end device may be divided into functional modules based on the foregoing method example. For example, each functional module may be obtained through division based on each corresponding function, or two or more functions may be integrated in one processing module. The integrated module may be implemented in a form of hardware, or may be implemented in a form of a software functional module. It should be noted that, in embodiments of this application, module division is an example, and is merely logical function division. During actual implementation, another division manner may be used. Descriptions are provided below by using an example in which each functional module is obtained through division based on each corresponding function.

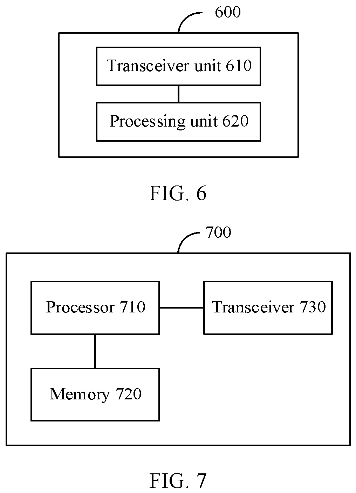

The method provided in embodiments of this application is described above in detail with reference to FIG. 2 to FIG. 5. The following describes in detail apparatuses provided in embodiments of this application with reference to FIG. 6 to FIG. 7. It should be understood that descriptions of apparatus embodiments correspond to the descriptions of the method embodiments. Therefore, for content that is not described in detail, refer to the foregoing method embodiments. For brevity, details are not described herein again.

FIG. 6 is a schematic block diagram of a packet processing apparatus according to an embodiment of this application. The packet processing apparatus 600 includes a transceiver unit 610 and a processing unit 620. The transceiver unit 610 may implement a corresponding communication function, and the processing unit 620 may read instructions and/or data in a storage unit, so that a communication device implements the foregoing method embodiments. The transceiver unit 610 may also be referred to as a communication interface or a communication unit.

Specifically, the packet processing apparatus 600 may be any device in this application. For example, the packet processing apparatus may be a first device or a second device, and may implement a function that can be implemented by the device. It should be understood that the packet processing apparatus 600 may be a physical device, or may be a component (for example, an integrated circuit, a chip, or the like) of a physical device, or may be a functional module in a physical device.

For example, the packet processing apparatus 600 may be configured to implement a function of the first device in this application. The transceiver unit 610 is configured to receive a first packet, where the first packet includes a first bearing area and a second bearing area, and the first bearing area bears a first destination media access control layer protocol address DA and a first source media access control layer protocol address SA. The processing unit 620 is configured to perform slicing processing on the second bearing area based on a preset slice length to obtain N slices, where the N slices do not include the first DA and the first SA. The processing unit is further configured to encapsulate each of the N slices to obtain N Ethernet frames, where the N Ethernet frames are in a one-to-one correspondence with the N slices, and the first DA and the first SA are used for encapsulating at least one of the N slices. The transceiver unit is further configured to send the N Ethernet frames.

For example, The processing unit 620 is further configured to strip the first bearing area from the first packet to obtain the second bearing area. The first device performs slicing processing on the second bearing area.

Specifically, the transceiver unit 610 of the packet processing apparatus 600 receives the first packet, and the processing unit 620 performs slicing processing on the second bearing area of the first packet. That is, the first bearing area of the first packet is not involved in slicing. After obtaining a slice, the processing unit 620 encapsulates the slice. The processing unit 620 encapsulates at least one slice by using the first DA and the first SA that are of the first packet, and encapsulates the slice into an Ethernet frame. The transceiver unit 610 sends the Ethernet frame.

It should be understood that the foregoing content is merely used as an example for description. The processing unit 620 and the transceiver unit 610 are further configured to perform all processing operations related to the first device in the foregoing method 500, and can implement beneficial effects corresponding to the method side. For ease of brief description, details are not described herein again.

For example, the packet processing apparatus 600 may be further configured to implement a function of the second device in this application. The transceiver unit 610 is configured to receive at least one Ethernet frame, where at least one Ethernet frame is at least one Ethernet frame obtained by the processing apparatus by performing slicing processing on a second bearing area of a first packet based on a preset slice length to obtain at least one slice and encapsulating the at least one slice. The processing unit 620 is configured to restore the first packet based on the at least one Ethernet frame.

Specifically, the transceiver unit 610 of the packet processing apparatus 600 receives Ethernet frames; and the processing unit 620 sorts and reassembles the received Ethernet frames to restore the original first packet.

It should be understood that the foregoing content is merely an example for description. The processing unit 620 and the transceiver unit 610 are further configured to perform all processing operations related to the second device in the foregoing method 500, and can implement beneficial effects corresponding to the method side. A specific process of performing a corresponding step by each unit is described in detail in the foregoing method embodiments. For brevity, details are not described herein again.

An embodiment of this application further provides a packet processing apparatus 700. The packet processing apparatus 700 includes a processor 710. The processor 710 is coupled to a memory 720. The memory 720 is configured to store a computer program or instructions and/or data. The processor 710 is configured to execute the computer program or the instructions and/or the data stored in the memory 720, so that the methods in the foregoing method embodiments are performed.

Optionally, the packet processing apparatus 700 includes one or more processors 710.

Optionally, as shown in FIG. 7, the packet processing apparatus 700 may further include the memory 720.

Optionally, the packet processing apparatus 700 may include one or more memories 720.

Optionally, the memory 720 and the processor 710 may be integrated together, or disposed separately.

Optionally, as shown in FIG. 7, the packet processing apparatus 700 may further include a transceiver 730, and the transceiver 730 is configured to receive and/or send a signal. For example, the processor 710 is configured to control the transceiver 730 to receive and/or send a signal.

In another solution, the packet processing apparatus 700 is configured to implement the operations performed by the communication device in the foregoing method embodiments.

For example, the processor 710 is configured to implement a processing-related operation performed by the communication device in the foregoing method embodiments, and the transceiver 730 is configured to implement a transceiver-related operation performed by the communication device in the foregoing method embodiments.

An embodiment of this application further provides a computer-readable storage medium. The computer-readable storage medium stores computer instructions used for implementing the method performed by the terminal device or the method performed by the communication device in the foregoing method embodiments.

For example, when a computer program is executed by a computer, the computer is enabled to implement the method performed by the terminal device or the method performed by the communication device in the foregoing method embodiments.

An embodiment of this application further provides a computer program product including instructions. When the instructions are executed by a computer, the computer is enabled to implement the method performed by the terminal device or the method performed by the communication device in the foregoing method embodiments.

A specific structure of an execution body of the method provided in embodiments of this application is not specifically limited in embodiments of this application, provided that a program that records code for the method provided in embodiments of this application can be run to perform communication according to the method provided in embodiments of this application. For example, the method provided in embodiments of this application may be performed by a terminal device or a communication device, or a functional module that is in the terminal device or the communication device and that can invoke and execute the program.

Aspects or features of this application may be implemented as a method, an apparatus, or a product that uses standard programming and/or engineering technologies. The term "product" used in this specification may cover a computer program that can be accessed from any computer-readable component, carrier or medium. For example, a computer-readable medium may include but is not limited to a magnetic storage component (for example, a hard disk drive, a floppy disk, or a magnetic tape), an optical disc (for example, a compact disc (CD), or a digital versatile disc (DVD)), a smart card, and a flash memory component (for example, an erasable programmable read-only memory (EPROM), a card, a stick, or a key drive).

Various storage media described in this specification may indicate one or more devices and/or other machine-readable media that are configured to store information. The term "machine-readable media" may include but is not limited to a radio channel and various other media that can store, include, and/or carry instructions and/or data.

It should be understood that, the processor mentioned in embodiments of this application may be a CPU or may be another general-purpose processor, a digital signal processor (DSP), an application-specific integrated circuit (ASIC), a field programmable gate array (FPGA) or another programmable logical device, a discrete gate or transistor logic device, a discrete hardware component, or the like. The general-purpose processor may be a microprocessor, or the processor may be any conventional processor or the like.

It may be understood that the memory mentioned in embodiments of this application may be a volatile memory or a nonvolatile memory, or may include a volatile memory and a nonvolatile memory. The nonvolatile memory may be a read-only memory (read-only memory, ROM), a programmable read-only memory (programmable ROM, PROM), an erasable programmable read-only memory (erasable PROM, EPROM), an electrically erasable programmable read-only memory (electrically EPROM, EEPROM), or a flash memory. The volatile memory may be a random access memory (RAM). For example, the RAM may be used as an external cache. By way of example, and not limitation, the RAM may include the following plurality of forms: a static random access memory (static RAM, SRAM), a dynamic random access memory (dynamic RAM, DRAM), a synchronous dynamic random access memory (synchronous DRAM, SDRAM), a double data rate synchronous dynamic random access memory (double data rate SDRAM, DDR SDRAM), an enhanced synchronous dynamic random access memory (enhanced SDRAM, ESDRAM), a synchlink dynamic random access memory (synchlink DRAM, SLDRAM), and a direct rambus random access memory (direct rambus RAM, DRRAM).

It should be noted that when the processor is a general-purpose processor, a DSP, an ASIC, an FPGA or another programmable logic device, a discrete gate or a transistor logic device, or a discrete hardware component, the memory (storage module) may be integrated into the processor.

It should further be noted that the memory described in this specification is intended to include but is not limited to these memories and any memory of another proper type.

A person of ordinary skill in the art may be aware that, in combination with the examples described in embodiments disclosed in this specification, units and algorithm steps may be implemented by electronic hardware or a combination of computer software and electronic hardware. Whether the functions are performed by hardware or software depends on particular applications and design constraints of the technical solutions. A person skilled in the art may use different methods to implement the described functions for each particular application, but it should not be considered that the implementation goes beyond the scope of this application.

It may be clearly understood by a person skilled in the art that, for the purpose of convenient and brief description, for a detailed working process of the foregoing system, apparatus, and unit, refer to a corresponding process in the foregoing method embodiments. Details are not described herein again.

When the functions are implemented in the form of a software functional unit and sold or used as an independent product, the functions may be stored in one computer-readable storage medium. Based on such an understanding, the technical solutions of this application essentially, or the part contributing to the conventional technology, or some of the technical solutions may be implemented in a form of a computer software product. The software product is stored in a storage medium, and includes several instructions for instructing a computer device (which may be a personal computer, a server, or a network device) to perform all or some of the steps of the methods described in embodiments of this application. The foregoing storage medium includes any medium, such as a USB flash drive, a removable hard disk, a ROM, a RAM, a magnetic disk, or an optical disc, that can store program code.

The foregoing descriptions are merely specific implementations of this application, but are not intended to limit the protection scope of this application. Any variation or replacement readily figured out by a person skilled in the art within the technical scope disclosed in this application shall fall within the protection scope of this application. Therefore, the protection scope of this application shall be subject to the protection scope of the claims.

## Claims

1. A packet processing method, comprising:
receiving, by a first device, a first packet, wherein the first packet comprises a first bearing area and a second bearing area, and the first bearing area bears a first destination media access control layer protocol address DA and a first source media access control layer protocol address SA;
performing, by the first device, slicing processing on the second bearing area to obtain N slices, wherein N is a positive integer greater than or equal to 1;
encapsulating, by the first device, each of the N slices to obtain N Ethernet frames, wherein the N Ethernet frames are in a one-to-one correspondence with the N slices, and the first DA and the first SA are used for encapsulating at least one of the N slices; and
sending, by the first device, the N Ethernet frames.

2. The method according to claim 1, wherein the performing, by the first device, slicing processing on the second bearing area comprises:
stripping, by the first device, the first bearing area from the first packet to obtain the second bearing area; and
performing, by the first device, slicing processing on the second bearing area.

3. The method according to claim 1 or 2, wherein the first DA and the first SA are used for encapsulating each of the N slices.

4. The method according to claim 1 or 2, wherein the first DA and the first SA are used for encapsulating one of the N slices, and N-1 of the N slices are encapsulated by using a second DA and a second SA.

5. The method according to any one of claims 1 to 4, wherein a length of each of the N slices is 128 to 1522 bytes.

6. A packet processing method, comprising:
receiving, by a second device, N Ethernet frames, wherein the N Ethernet frames are N Ethernet frames obtained by a first device by performing slicing processing on a second bearing area of a first packet to obtain N slices and encapsulating the N slices, and N is a positive integer greater than or equal to 1; and
restoring, by the second device, the first packet based on the N Ethernet frames.

7. A packet processing apparatus, comprising:
a transceiver unit, configured to receive a first packet, wherein the first packet comprises a first bearing area and a second bearing area, and the first bearing area bears a first destination media access control layer protocol address DA and a first source media access control layer protocol address SA; and
a processing unit, configured to perform slicing processing on the second bearing area to obtain N slices, wherein N is a positive integer greater than or equal to 1, wherein
the processing unit is further configured to encapsulate each of the N slices to obtain N Ethernet frames, wherein the N Ethernet frames are in a one-to-one correspondence with the N slices, and a first DA and a first SA are used for encapsulating at least one of the N slices; and
the transceiver unit is further configured to send the N Ethernet frames.

8. The packet processing apparatus according to claim 7, wherein that a processing unit performs slicing processing on the second bearing area further comprises:
the processing unit strips the first bearing area from the first packet, to obtain the second bearing area; and
the packet processing apparatus performs slicing processing on the second bearing area.

9. The packet processing apparatus according to claim 7 or 8, wherein the first DA and the first SA are used for encapsulating each of the N slices.

10. The packet processing apparatus according to claim 7 or 8, wherein the first DA and the first SA are used for encapsulating one of the N slices, and N-1 of the N slices are encapsulated by using a second DA and a second SA.

11. The packet processing apparatus according to any one of claims 7 to 10, wherein a length of each of the N slices is 128 to 1522 bytes.

12. A packet processing apparatus, comprising:
a transceiver unit, configured to receive N Ethernet frames, wherein the N Ethernet frames are N Ethernet frames obtained by a processing apparatus by performing slicing processing on a second bearing area of a first packet to obtain N slices and encapsulating the N slices, and N is a positive integer greater than or equal to 1; and
a processing unit, configured to restore the first packet based on the N Ethernet frames.

13. A packet processing system, comprising:
a first device, configured to receive a first packet, wherein the first packet comprises a first bearing area and a second bearing area, and the first bearing area bears a first destination media access control layer protocol address DA and a first source media access control layer protocol address SA, wherein
the first device is further configured to perform slicing processing on the second bearing area to obtain N slices, wherein N is a positive integer greater than or equal to 1;
the first device is further configured to encapsulate each of the N slices to obtain N Ethernet frames, wherein the N Ethernet frames are in a one-to-one correspondence with the N slices, and a first DA and a first SA are used for encapsulating at least one of the N slices; and
the first device is further configured to send the N Ethernet frames; and
a second device, configured to receive the N Ethernet frames, wherein
the second device is further configured to restore the first packet based on the N Ethernet frames.

14. The packet processing system according to claim 13, wherein
the first device is further configured to strip the first bearing area from the first packet to obtain the second bearing area; and
the first device performs slicing processing on the second bearing area.

15. The packet processing system according to claim 13 or 14, wherein the first DA and the first SA are used for encapsulating each of the N slices.

16. The packet processing system according to claim 13 or 14, wherein the first DA and the first SA are used for encapsulating one of the N slices, and N-1 of the N slices are encapsulated by using a second DA and a second SA.

17. The packet processing system according to any one of claims 13 to 16, wherein a length of each of the N slices is 128 to 1522 bytes.

18. A packet processing apparatus, comprising:
a memory, configured to store computer instructions; and
a processor, configured to execute the computer instructions stored in the memory, to enable the packet processing apparatus to perform the method according to any one of claims 1 to 6.

19. A computer-readable storage medium, wherein the computer-readable storage medium stores a computer program; and when the computer program is executed by a communication apparatus, the communication apparatus is enabled to perform the method according to any one of claims 1 to 6.
